# EUROPÄISCHE PATENTANMELDUNG

(11) **EP 4 378 355 A1**
(43) Veröffentlichungstag der Anmeldung: **05.06.2024**
(21) Anmeldenummer: 23209306.2
(22) Anmeldetag: 13.11.2023
(51) Int. Cl.: A47B 88/487, A47B 88/493

(54) **AUSZUGSFÜHRUNG**

(30) Priorität: 30.11.2022 DE 102022131798
(71) Anmelder: Paul Hettich GmbH & Co. KG, 32278 Kirchlengern (DE)
(72) Erfinder: LÖH, Andreas, 32278 Kirchlengern (DE); LESSMANN, Dr. Johann-Sebastian, 32584 Löhne (DE); KUHLMANN, Jürgen, 49326 Melle (DE)
(74) Vertreter: Dantz, Jan Henning

(57) **Zusammenfassung**

Eine Auszugsführung (1) umfasst mindestens zwei relativ zueinander bewegbare Schienen (2, 5), zwischen denen in einem Wälzkörperkäfig (14) gehaltene Wälzkörper (13) angeordnet sind, die an Laufbahnen an den Schienen (2, 5) abrollbar sind, wobei die Schienen (2, 5) in mindestens einer Position über eine Halteeinrichtung (9) lösbar gehalten sind, wobei die Halteeinrichtung (9) mindestens einen integral mit einer der Schienen (2, 5) ausgebildeten Federsteg (10) umfasst, mittels dem der Wälzkörperkäfig (14) klemmend an der anderen Schiene (2, 5) festlegbar ist. Dadurch kann die bewegbare Schiene mit einfachen Mitteln in einer vorbestimmten Position an der stationären Schiene gehalten werden.

## Beschreibung

Die vorliegende Erfindung betrifft eine Auszugsführung mit mindestens zwei relativ zueinander bewegbaren Schienen, zwischen denen in einem Wälzkörperkäfig gehaltene Wälzkörper angeordnet sind, die an Laufbahnen an den Schienen abrollbar sind, wobei die Schienen in mindestens einer Position über eine Halteeinrichtung lösbar gehalten sind.

Die DE 10 2012 210 001 A1 offenbart eine Schienenauszugsvorrichtung für ein Haushaltsgerät, bei der zwei Schienen relativ zueinander verschiebbar sind. Über eine Rastvorrichtung können die Schienen in einer Endstellung aneinander verrastet werden, wobei die Rastvorrichtung eine Rastprägung in Form eines Höckers umfasst, der von einem Wälzkörper in Form einer Kugel überfahren wird, um die Scheine zu verrasten. Durch eine solche Prägung können allerdings nur geringe Haltekräfte bereitgestellt werden, und es kann insbesondere zu einem Schlupf kommen, da die Wälzkörper mit Spiel zwischen den Schienen angeordnet sind. Zudem kann es durch die starre Prägung zu Verklemmungen kommen, wenn die Kugel ungünstig auf die Prägung aufläuft. Ein weiterer Nachteil liegt in dem recht hohen Verschleiß an der Rastvorrichtung, und damit in der Abnahme der Rastkräfte bei einem nicht federnden Rastelement.

Es ist daher Aufgabe der vorliegenden Erfindung, eine Auszugsführung zu schaffen, die mit einfachen Mitteln eine lösbare Fixierung einer Schiene einer Auszugsführung ermöglicht.

Diese Aufgabe wird mit einer Auszugsführung mit den Merkmalen des Anspruches 1 gelöst.

Die erfindungsgemäße Auszugsführung weist mindestens zwei relativ zueinander bewegbare Schienen auf, zwischen denen in einem Wälzkörperkäfig gehaltene Wälzkörper angeordnet sind, die an Laufbahnen an den Schienen abrollbar sind, wobei die Schienen in mindestens einer Position über eine Halteeinrichtung lösbar gehalten sind, wobei die Halteeinrichtung mindestens einen integral mit einer der Schienen ausgebildeten Federsteg umfasst, mittels dem der Wälzkörperkäfig klemmend gegen die andere Schiene gedrückt wird und somit klemmend zwischen den Schienen festgelegt ist. Dadurch kann die bewegbare Schiene in einer vorbestimmten Position über den Federsteg klemmend gehalten werden, indem senkrecht zur Längsrichtung der Schienen Kräfte durch den Federsteg auf den Wälzkörperkäfig und die andere Schiene aufgebracht werden, was zu Reibkräften führt, die ein Halten der bewegbaren Schiene bewirken. Die Haltekräfte sind dabei durch die Klemmkräfte des biegbaren Federsteges vorgegeben und eine Blockierung der Auszugsführung wird durch die elastische Ausgestaltung des Federsteges vermieden. Durch die integrale Ausbildung des Federsteges mit einer der Schienen werden keine zusätzlichen Bauteile für die lösbare Fixierung der Schiene benötigt.

Alternativ kann auch auf zwei gegenüberliegenden Seiten der einen Schiene je mindestens ein Federsteg ausgebildet sein, die den Wälzkörperkäfig von beiden Seiten klemmend an der anderen Schiene festlegen.

Bevorzugt ist der Federsteg benachbart zu einer Laufbahn für Wälzkörper angeordnet. Dabei kann der Federsteg für eine kompakte Bauweise zwischen zwei Laufbahnen angeordnet sein, wobei der Federsteg in der Halteposition auf einen Steg des Wälzkörperkäfigs drückt, der sich zwischen zwei Wälzkörpern befindet. Die Wälzkörper können beispielsweise als Kugeln ausgebildet sein, die an bogenförmigen Laufbahnen geführt sind, so dass der Federsteg zwischen den zwei gebogenen Abschnitten vorgesehen werden kann, insbesondere an einem geraden Abschnitt der Schiene, der in der montierten Position vertikal oder horizontal oder geneigt hierzu ausgerichtet sein kann. Es können auch in einem mittleren Bereich und/oder einem hinteren Bereich der Schiene jeweils zwei Federstege vorgesehen sein, wobei ein Federsteg horizontal und ein Federsteg vertikal ausgerichtet ist.

Der Federsteg ist bevorzugt von einem im Wesentlichen U-förmigen Schlitz umgeben. Dabei können die Schenkel des im Wesentlichen U-förmigen Schlitzes zumindest teilweise, insbesondere über die gesamte Länge parallel zu einer Längsrichtung der Schiene ausgebildet sein. Zwischen den freien Enden der Schenkel des Schlitzes kann ein stegförmiger Verbindungsbereich zu der Schiene ausgebildet ist.

Der Federsteg steht vorzugsweise in einen Innenraum zwischen den Schienen hervor, um den Wälzkörperkäfig gegen die andere Schiene zu drücken. Der Federsteg kann dabei den Wälzkörperkäfig gegen einen zu dem Wälzkörperkäfig hervorstehenden Vorsprung an der anderen Schiene drücken, der beispielsweise integral mit der anderen Schiene durch Umformen, insbesondere Prägen hergestellt sein kann. Der Vorsprung erstreckt sich dabei nicht über die ganze Länge der anderen Schiene sondern ist nur im Bereich der Halteposition angeordnet.

Alternativ kann an jeder der Schienen ein Federsteg ausgebildet sein, der in einen Innenraum zwischen den Schienen hervorsteht. Dabei wird der Wälzkörperkäfig durch die beiden Federstege gehalten, indem beide Federstege gleichzeitig auf einen Steg des Wälzkörperkäfigs drücken.

Der Federsteg kann dabei durch Stanzen und Biegen oder durch weitere Verfahren zur Bearbeitung eines Metallbleches hergestellt werden, aus dem die Schiene gebildet wird.

Der Wälzkörperkäfig ist bevorzugt aus einem gebogenen Metallblech oder gezogenen Metallprofil hergestellt und umfasst Aufnahmen oder Taschen für die Wälzkörper, in denen diese drehbar gehalten sind. Alternativ kann der Wälzkörperkäfig auch aus einem anderen ausreichend festen und temperaturbeständigen Material und/oder mit einem anderen Verfahren hergestellt sein, beispielsweise mit Druck- oder Spritzguss.

An der Auszugsführung können zwei in Längsrichtung der Schiene beabstandete Halteeinrichtungen mit jeweils einem integral ausgebildeten Federsteg zur Fixierung einer der Schienen in unterschiedlichen Positionen vorgesehen sein. Bevorzugt ist die verfahrbare Schiene mit einem oder mehreren Federstegen versehen, um diese in unterschiedlichen Positionen entlang der stationären Schiene halten zu können. Alternativ können die Federstege aber auch an der stationären Schiene ausgebildet sein. Zudem kann die Auszugsführung statt zwei Schienen auch mehr als zwei Schienen umfassen, insbesondere kann eine auszugsverlängernde Mittelschiene zwischen zwei Schienen vorgesehen werden, auf welche jeweils mindestens eine Halteeinrichtung der benachbarten Schienen wirkt.

Der Federsteg kann optional ausschließlich eine Oberfläche des Wälzkörperkäfig kontaktieren. Alternativ kann der Federsteg auch so ausgebildet sein, dass er in Kontakt mit mindestens einen Wälzkörper gelangen kann und durch diesen bewegbar ist. Dadurch kann auch der Wälzkörper über den Federsteg klemmend oder rastend fixiert werden, indem senkrecht zur Längsrichtung der Schienen Kräfte durch den Federsteg aufgebracht werden, die zum Halten der Schiene führen. Vorzugsweise ist durch den Federsteg dann auch der Wälzkörper klemmend oder rastend fixierbar.

Die Auszugsführung wird vorzugsweise bei Haushaltsgeräten, insbesondere bei Backöfen, eingesetzt. Dabei kann die Auszugsführung an einem Seitengitter des Backofens fixiert werden, um in einer herausgezogenen Position über die Halteeinrichtung gehalten zu werden. Alternativ kann die Auszugsführung auch bei Möbeln, beispielsweise bei Schubkästen oder Tablarauszügen eingesetzt werden.

Die Erfindung wird nachfolgend anhand eines Ausführungsbeispiels mit Bezug auf die beigefügten Zeichnungen näher erläutert. Es zeigen:

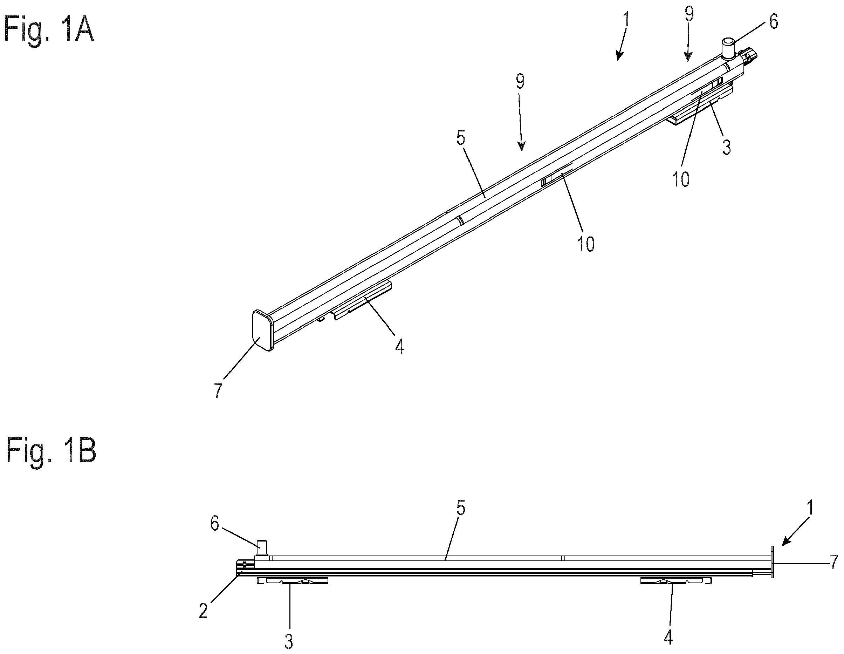

- Figuren 1A und 1B: zwei Ansichten einer Auszugsführung in einer nahezu eingefahrenen Position;
- Figuren 2A und 2B: zwei Ansichten der Auszugsführung in einer ausgefahrenen Position;
- Figuren 3A bis 3C: zwei Ansichten der Auszugsführung der Figur 1 vor dem Erreichen einer Halteposition, und
- Figuren 4A bis 4D: mehrere Ansichten der Auszugsführung in der Halteposition.

Eine Auszugsführung 1 umfasst eine stationäre Schiene 2, die über einen vorderen Halter 4 und einen hinteren Halter 3 an einer Strebe eines Seitengitters fixierbar ist. Dadurch kann die Auszugsführung 1 an einem Seitengitter in einem Backofen montiert werden. Die Auszugsführung 1 kann auch an anderer Position, auf andere Art und Weise oder aber auch an Möbeln oder anderen Haushaltsgeräten montiert werden.

An der stationären Schiene 2 ist eine verfahrbare Schiene 5 bewegbar gelagert, die optional an einer vorderen Stirnseite eine Platte 7 aufweist und einen hinteren Bolzen 6. Anstelle eines Bolzens 6 oder einer Platte 7 können auch Anschläge und/oder Stopfen vorhanden sein. Die Begriffe "vorne" und "hinten" beziehen sich dabei auf die Auszugsrichtung der verfahrbaren Schiene 5.

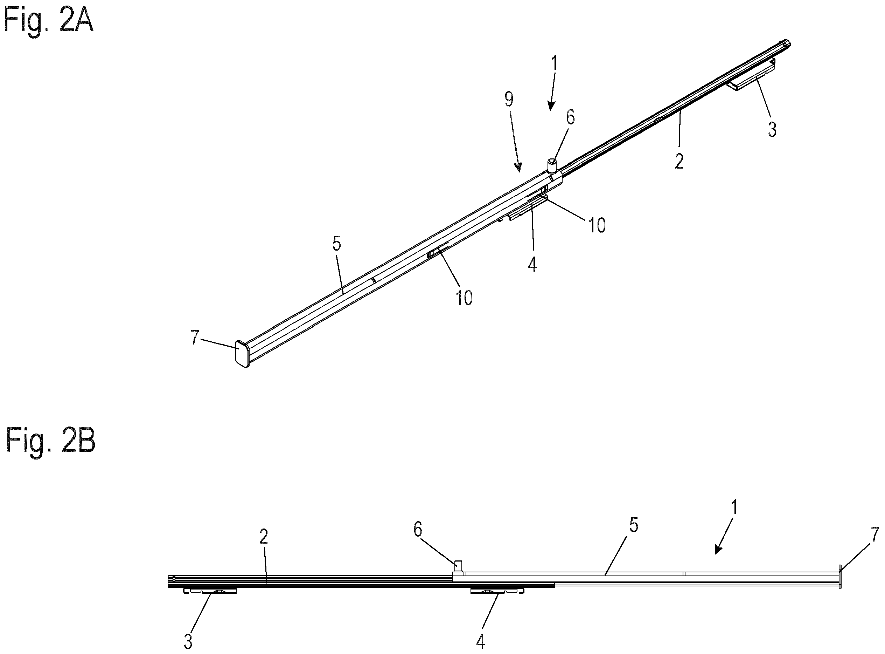

Um die verfahrbare Schiene 5 in zwei unterschiedlichen Positionen lösbar fixieren zu können, sind zwei Halteeinrichtungen 9 vorgesehen, die jeweils einen integral mit der Schiene 5 ausgebildeten biegbaren Federsteg 10 umfassen. In der eingefahrenen Position ist die Schiene 5 dabei an der Halteeinrichtung 9 im mittleren Bereich der Schiene 5 fixiert, während die Schiene 5 in einer ausgefahrenen Position an der Halteeinrichtung 9 benachbart zu dem Bolzen 6 fixiert ist, wobei die ausgefahrene Position der Auszugsführung 1 in den Figuren 2A und 2B dargestellt ist.

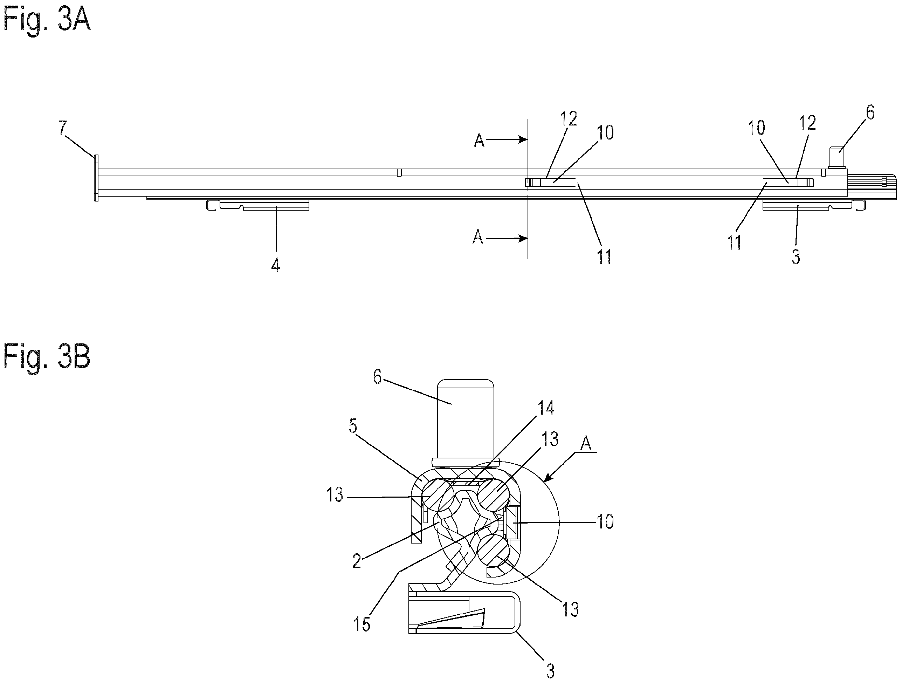

In Figur 3A und 3B ist die Auszugsführung 1 in der Position kurz vor Erreichen einer eingefahrenen Halteposition gezeigt. Die zwei biegbaren Federstege 10 sind von einem U-förmigen Schlitz 12 umgeben, wobei zwischen den beiden Schenkeln des U an dem freien Ende ein Verbindungssteg 11 mit der Schiene 5 ausgebildet ist. Jeder Federsteg 10 kann eine Länge in Längsrichtung der Schiene 5 von beispielsweise 5 mm bis 150 mm, insbesondere 8 mm bis 50 mm, besitzen. Dabei sind die beiden Schenkel des U-förmigen Schlitzes 12 in einem Bereich benachbart zu dem Verbindungssteg 11 parallel zur Längsrichtung ausgerichtet. Optional können die Schenkel des Schlitzes 12 auch aufspreizen oder zusammenlaufen. Ferner kann der Federsteg 10 nicht parallel bzw. in einem Winkel zur Laufbahn angeordnet sein.

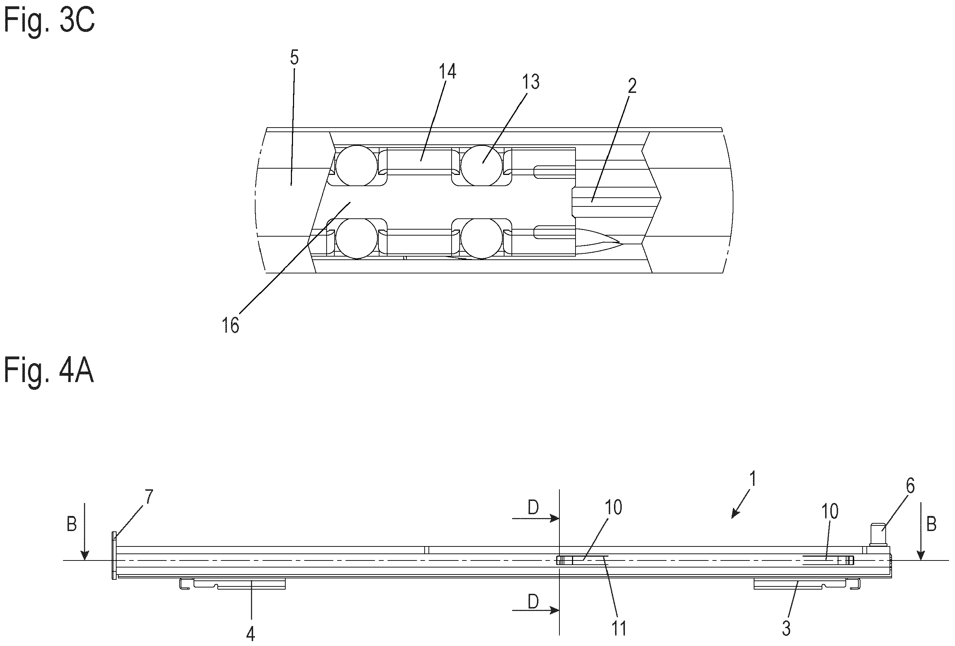

In Figur 3C ist die äußere Schiene 5 teilweise weggeschnitten, so dass der Wälzkörperkäfig 14 mit Wälzkörpern 13 sichtbar ist, um die Schiene 5 relativ zu der Schiene 2 verfahren zu können. Die Wälzkörper 13 rollen an bogenförmigen Laufbahnen an den Schienen 2 und 5 ab, wobei der Federsteg 10 an einem geraden Übergangsbereich zwischen zwei Laufbahnen angeordnet ist. In der montierten Position befindet sich der gerade Übergangsbereich an einem vertikalen Steg der Schiene 5.

Die Wälzkörper 13 sind kugelförmig ausgebildet und in Taschen oder Aufnahmen an dem Wälzkörperkäfig 14 gehalten. In einer Ebene senkrecht zur Längsrichtung der Schiene 2 sind jeweils drei Wälzkörper 13 angeordnet. Der Wälzkörperkäfig 14 ist bevorzugt aus einem gebogenen Metallblech hergestellt. Zwischen zwei Taschen für zwei Wälzkörper 13 an dem Wälzkörperkäfig 14 ist ein sich in Längsrichtung erstreckender Streifen 16 ausgebildet, der durch die beiden Federstege 10 kontaktierbar ist, um den Wälzkörperkäfig 14 klemmend in der jeweiligen Halteposition zwischen dem Federsteg 10 und der Schiene 2 zu fixieren.

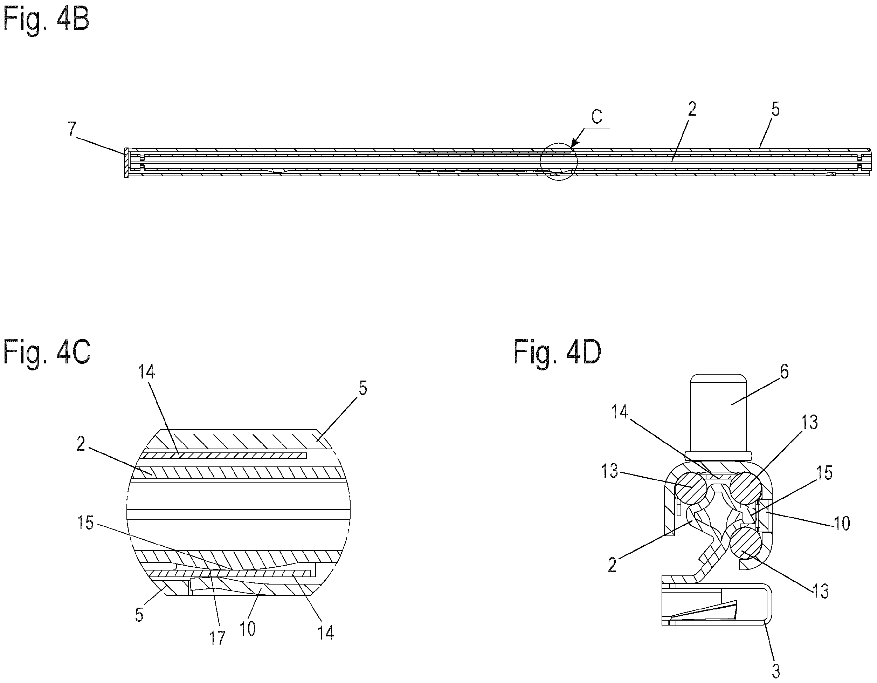

In den Figur 4A bis 4D ist die Auszugsführung in einer eingefahrenen Position gezeigt, wobei die Schnittansichten der Figuren 4C und 4D durch die Halteeinrichtung 9 in dem mittleren Bereich der Schiene 5 gelegt sind. Der Federsteg 10 steht in den Innenraum zwischen den Schienen 2 und 5 hervor und drückt auf den Streifen 16 des Wälzkörperkäfigs 14 zwischen zwei Wälzkörpern 13. An der Schiene 2 ist ein Vorsprung 15 ausgebildet, der zu dem Wälzkörperkäfig 14 hervorsteht. Der Vorsprung 15 kann durch Prägen hergestellt sein oder durch ein separates Bauteil gebildet sein, der an der Schiene 2 befestigt wird. Der Vorsprung 15 erstreckt sich dabei nicht über die ganze Länge der Schiene 2 sondern ist nur im Bereich der Halteposition angeordnet, beispielsweise mit einer Länge in Längsrichtung der Schiene zwischen 2mm bis 40mm, insbesondere 5mm bis 20mm.

Durch das Andrücken einer Wölbung 17 am Ende des Federsteges 10 gegen den Wälzkörperkäfig 14 und den Vorsprung 15 an der Schiene 2 ergeben sich Haltekräfte durch Reibung für die verfahrbare Schiene 5 in der Halteposition, die erst überwunden werden müssen, bevor die Schiene 5 aus der eingefahrenen Position wieder in die ausgefahrene Position bewegt werden soll. Die andere Halteeinrichtung 9 an der Schiene 5 funktioniert genauso.

In dem dargestellten Ausführungsbeispiel sind in einer Ebene senkrecht zur Längsrichtung drei Wälzkörper 13 angeordnet und über einen Wälzkörperkäfig 14 gehalten. Es ist natürlich auch möglich, nur zwei Wälzkörper 13 oder mehr als drei Wälzkörper 13 in einer Ebene vorzugsehen. Zudem können statt kugelförmiger Wälzkörper 13 auch andere Wälzkörper in Form von Tonnen, Zylindern oder Nadeln eingesetzt werden, um eine Verrastung über einen Federsteg 10 zu bewirken.

In dem dargestellten Ausführungsbeispiel ist der Federsteg 10 an der verfahrbaren Schiene 5 ausgebildet. Es ist auch möglich, den Federsteg 10 an der stationären Schiene 2 auszubilden, damit dieser den Wälzkörperkäfig 14 zu der verfahrbaren Schiene 5 hin vorspannt. Auch ist es möglich, ein oder mehrere Federstege an unterschiedlichen Positionen an einem Mittelprofil auszubilden.

### Bezugszeichenliste

- 1: Auszugsführung
- 2: Schiene
- 3: Halter
- 4: Halter
- 5: Schiene
- 6: Bolzen
- 7: Platte
- 9: Halteeinrichtung
- 10: Federsteg
- 11: Verbindungssteg
- 12: Schlitz
- 13: Wälzkörper
- 14: Wälzkörperkäfig
- 15: Vorsprung
- 16: Streifen
- 17: Wölbung

## Patentansprüche

1. Auszugsführung (1) mit mindestens zwei relativ zueinander bewegbaren Schienen (2, 5), zwischen denen in einem Wälzkörperkäfig (14) gehaltene Wälzkörper (13) angeordnet sind, die an Laufbahnen an den Schienen (2, 5) abrollbar sind, wobei die Schienen (2, 5) in mindestens einer Position über eine Halteeinrichtung (9) lösbar gehalten sind, **dadurch gekennzeichnet, dass** die Halteeinrichtung (9) mindestens einen integral mit einer der Schienen (2, 5) ausgebildeten Federsteg (10) umfasst, mittels dem der Wälzkörperkäfig (14) klemmend an der anderen Schiene (2, 5) festlegbar ist.

2. Auszugsführung nach Anspruch 1, **dadurch gekennzeichnet, dass** der Federsteg (10) benachbart zu einer Laufbahn der Wälzkörper (13) angeordnet ist.

3. Auszugsführung nach Anspruch 1 oder 2, **dadurch gekennzeichnet, dass** der Federsteg (10) in der Halteposition zwischen zwei Laufbahnen angeordnet ist und den Wälzkörperkäfig (14) zwischen zwei Wälzkörpern (13) kontaktiert.

4. Auszugsführung nach einem der vorhergehenden Ansprüche, **dadurch gekennzeichnet, dass** der Federsteg (10) von einem im Wesentlichen U-förmigen Schlitz (12) umgeben ist.

5. Auszugsführung nach Anspruch 4, **dadurch gekennzeichnet, dass** die Schenkel des im Wesentlichen U-förmigen Schlitzes (12) zumindest teilweise parallel zu einer Längsrichtung der Schiene (5) ausgebildet sind.

6. Auszugsführung nach einem der vorhergehenden Ansprüche, **dadurch gekennzeichnet, dass** der Federsteg (10) in einen Innenraum zwischen den Schienen (2, 5) hervorsteht.

7. Auszugsführung nach einem der vorhergehenden Ansprüche, **dadurch gekennzeichnet, dass** an einer der Schienen (2, 5) an gegenüberliegenden Seiten je mindestens ein Federsteg (10) vorhanden ist, die den Wälzkörperkäfig (14) gegen die andere der Schienen (2, 5) klemmend festlegen.

8. Auszugsführung nach einem der vorhergehenden Ansprüche, **dadurch gekennzeichnet, dass** an dem Wälzkörperkäfig (14) ist ein sich in Längsrichtung erstreckender Streifen (16) ausgebildet, der durch mindestens einen Federsteg (10) kontaktierbar ist.

9. Auszugsführung nach einem der vorhergehenden Ansprüche, **dadurch gekennzeichnet, dass** der Federsteg (10) in einer montierten Position der Auszugsführung (1) an einem seitlichen Steg der Schiene (5) ausgebildet ist.

10. Auszugsführung nach einem der vorhergehenden Ansprüche, **dadurch gekennzeichnet, dass** der Federsteg (10) den Wälzkörperkäfig (14) gegen einen zu dem Wälzkörperkäfig (14) hervorstehenden Vorsprung (15) an der Schiene (2) drückt.

11. Auszugsführung nach einem der vorhergehenden Ansprüche, **dadurch gekennzeichnet, dass** das zwei voneinander in Längsrichtung der Schienen beabstandete Halteeinrichtungen (9) mit jeweils einem integral ausgebildeten Federsteg (10) zur Verrastung einer Schiene (2, 5) in unterschiedlichen Positionen vorgesehen sind.

12. Backofen, insbesondere mit einem Seitengitter, in dem eine Auszugsführung (1) nach einem der vorhergehenden Ansprüche fixiert ist.
